# EUROPEAN PATENT SPECIFICATION

(11) **EP 1 084 923 B1**
(45) Date of publication and mention of the grant of the patent: **19.10.2005**
(21) Application number: 00119096.6
(22) Date of filing: 04.09.2000
(51) Int. Cl.: B60T 11/21, F15B 7/08

(54) **Clutch actuators**
Kupplungsbetätigungsvorrichtung
Actionneur d'embrayage

(30) Priority: 14.09.1999 GB 9921527
(43) Date of publication of application: 21.03.2001
(73) Proprietor: AUTOMOTIVE PRODUCTS FRANCE S.A., 45520 Chevilly (FR)
(72) Inventor: Compain, Laurent, 45770 Saran (FR)
(74) Representative: Morrall, Roger

(56) References cited:
- DD-A- 209 150
- DE-C- 949 618
- FR-A- 2 779 103
- GB-A- 2 189 001
- US-A- 5 839 280

## Description

This invention relates to clutch actuators and in particular to such actuators for use where operation of a vehicle clutch from two independent clutch controls is required, as for example in a driving school vehicle where both the driving pupil and instructor are required to be able to operate the vehicle clutch independently.

Such actuators conventionally involve the use of relatively complex and cumbersome mechanical linkages which interconnect two separate clutch pedals with a clutch master cylinder. DD-A-209150 discloses an actuator where separate mechanical linkages can act on the piston and cylinder respectively of a master cylinder to provide a very basic actuating arrangement.

It is an object of the present invention to provide an improved actuator which avoids the use of the above cumbersome mechanical linkages.

Thus according to the present invention there is provided a clutch dual actuator for actuation from separate first and second clutch operating pedals, the actuator comprising a main piston moveable in a main bore to supply a clutch operating pressure to a clutch operating outlet from an actuating chamber, the main piston being independently moveable in said bore by forces applied thereto resulting from movement of the first and second pedals respectively the actuator being characterised in that the main piston is moveable in the main bore by contact with first and second pistons moveable in respective first and second bores.

In one arrangement one of the first and second pistons may be moved in its bore by a mechanical link with one pedal and the other of the first and second pistons may be moved in its bore by hydraulic pressure which enters its bore from a pressure source operated by the other pedal.

In an alternative arrangement both the first and second pistons are moved in their bores by hydraulic pressure which enters their respective bores from pressure sources operated by the respective first and second pedals.

In the above fully hydraulically actuated arrangement the first and second pistons are hydraulically balanced to move the main piston by the same amount in response to the admission of the same volume of fluid into the first and second bores.

The first and second input pistons are preferably disposed concentrically one inside the other.

The main piston is preferably spring-biased towards a fully retracted clutch released position in which the actuating chamber is in fluid communication with a fluid reservoir.

Valve means is preferably provided to allow fluid to enter the actuating chamber during retraction of the main piston to prevent the generation of a fluid depression in the actuating chamber. This valve means also facilitates filling of the clutch actuating system with fluid.

Preferably the first and second pistons are each spring-biased away from the main piston towards a fully retracted position in their respective bores.

The present invention will now be described, by way of example only, with reference to the accompanying drawings in which:-
Figure 1 is a section through a first form of dual actuator in accordance with the present invention which is independently operable both mechanically and hydraulically, and
Figure 2 is section through an alternative form of clutch actuator in accordance with the present invention which is independently operable by two separate hydraulic connections.

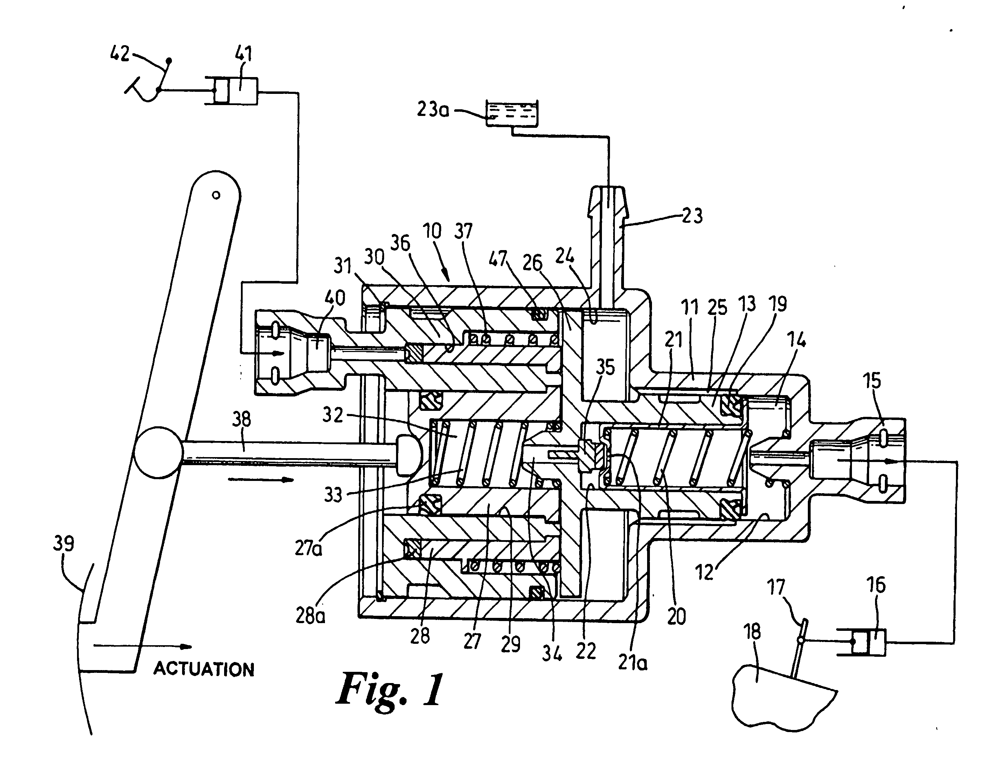

Referring to figure 1, a dual clutch actuator 10 comprises a body 11 having a main bore 12 in which a main piston 13 is moveable. Piston 13 defines an actuating chamber 14 from which pressurised fluid is expelled by piston 13 via an outlet 15 to a clutch operating slave cylinder 16 which in turn operates a conventional clutch actuating lever 17 which emerges from an associated vehicle clutch housing 18. The external slave 16 could be replaced with a conventional concentric slave cylinder disposed within housing 18 and surrounding the drive shaft.

Actuating chamber 14 is sealed by seals 19 carried on main piston 13 and piston 13 is biased to a retracted non-operating clutch engaged position shown in figure 1 by spring 20 which reacts at one end on body 11 and at the other end on a can 21 housed in a central bore 22 of piston 13 and having a hole 21a in the base thereof.

When piston 13 is in the figure 1 position seals 19 allow flow of fluid from reservoir 23a via inlet 23, bore 24 and axial grooves 25 into actuating chamber 14 to compensate for any leakage and for wear of the associated clutch. Main piston 13 also has a head portion 26 which slides in larger diameter bore 24 and which is contacted by a first piston 27 and a second outer annular piston 28.

First piston 27 slides in a first central bore 29 in an annular block 30 held captive in bore 24 by circlip 31. Piston 27 includes a chamber 32 in which is positioned a spring 33 which biases piston 27 away from main piston 13. Chamber 32 communicates with actuating chamber 14 via passage 34 in main piston 13, poppet valve 35 and hole 21a.

Second piston 28 slides in a second annular bore 36 within annular block 30 and is acted upon by a further spring 37 which biases piston 28 away from main piston 13. Springs 33 and 37 also help to provide "feel" to the associated pedals 39 and 42.

First piston 27 is operated directly by a push rod 38 connected with a first clutch actuating pedal 39 which is positioned at the main drivers position within the vehicle.

Second piston 28 is actuated by admitting pressurised fluid to bore 36 via inlet 40 which is connected with a master cylinder 41 operated by a second clutch pedal 42 which is positioned at a second position in the vehicle where the pedal 42 can be operated by a driving instructor.

Operation of the actuator is as follows:-
If the pedal 39 or the pedal 42 is operated either individually or collectively the associated pistons 27 and 28 are individually or collectively displaced into contact with the head portion 26 of main piston 13 thus moving the piston 13 within bore 12 to displace fluid from actuating chamber 14 to operate the associated clutch slave cylinder 16. Thus either clutch pedal can be used to disengage the clutch. When the operator of each pedal releases the clutch the associated piston 27 or 28 moves away from the head portion 26 of piston 13 to allow piston 13 to move towards the fully retracted position shown in figure 1 under the action of spring 20 in order to release the clutch.

As indicted above, when in the figure 1 position recouperation of fluid from reservoir 23a to the actuating chamber 14 is possible.

Poppet valve 35 allows movement of piston 13 away from outlet 15 without the danger of creation of any depression in actuating chamber 14.

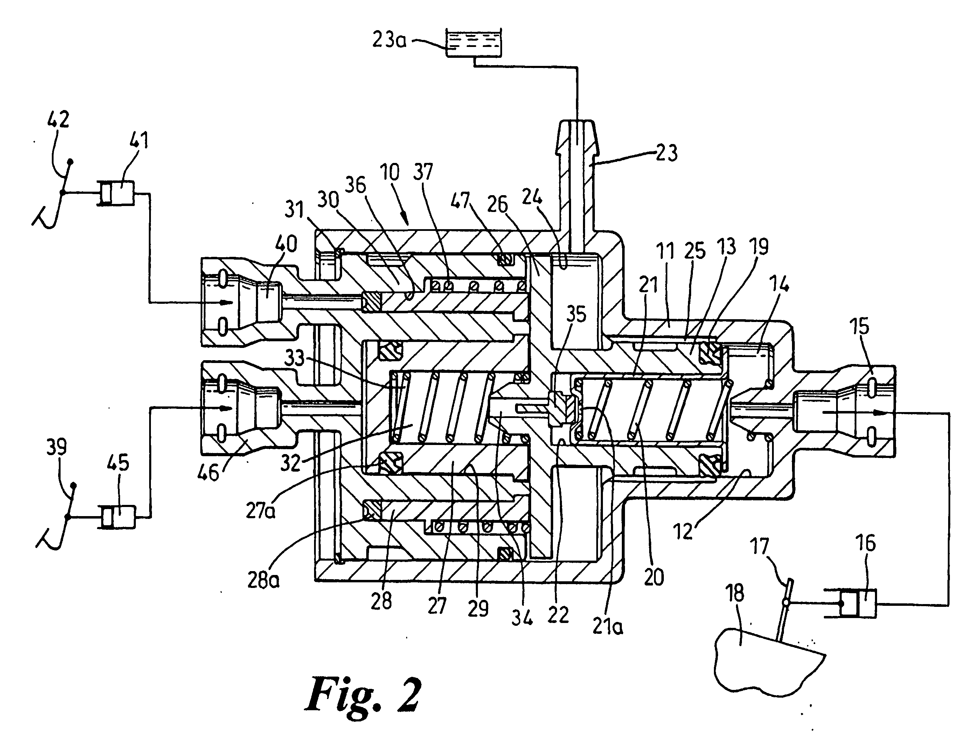

Figure 2 shows a modified form of the actuator shown in figure 1 in which similar components have been similarly numbered.

In figure 2, piston 27 is no longer directly operated by pedal 39 but is operated by a master cylinder 45 which is connected with a fluid inlet 46 which introduces pressurised fluid into bore 29 in annular block 30 which is now closed off to displace piston 27 under the action of the hydraulic pressure emanating from master cylinder 45.

The remainder of the constructional detail and function of the actuator shown in figure 2 is the same as that shown in figure 1 so that clutch disengaging pressure can again be generated in chamber 14 by the independent operation of pedals 39 and 42.

As will be appreciated, the main components of the actuators of figures 1 and 2 can be constructed by either metal or plastics material and can be supplied to the vehicle manufacturer in a dry or pre-filled condition.

The seal 47 on annular block 30 does not move during operation of the actuator thus significantly reducing the likelihood of leakage. Any leakage around the seals 27a and 28a of pistons 27 and 28 respectively tends to flow to areas within the actuator which are in communication with reservoir 23a thus further reducing the likelihood of leakage.

In the all hydraulically actuated construction of figure 2 the operative cross-sectional areas of pistons 27 and 28 are ranged to be equal so that will apply an equal force to main piston 13 on the introduction of equal volumes of fluid into the actuator via associated inlets 46 and 40.

As indicated above, when the pedai(s) are depressed, the seal 19 on piston 13 must semi chamber 14 before disengagement can commence. This creates a certain amount of "dead travel" when the pedal(s) are depressed. To improve the pedal efficiency of the actuator the diameter of chamber 14 can be increased to reduce the movement of piston 13 required to displace a given volume of fluid from chamber 14.

## Claims

1. A clutch dual actuator (10) for actuation from separate first and second clutch operating pedals (39,42), the actuator comprising a main piston (13) moveable in a main bore (12) to supply a clutch operating pressure to a clutch operating outlet (15) from an actuating chamber (14), the main piston being independently moveable in said bore by forces applied thereto resulting from movement of the first and second pedals respectively, the actuator being **characterised in that** the main piston (13) is moved in the main bore (12) by contact with first and second pistons (27,28) moveable in respective first and second bores (29,36).

2. An actuator according to claim 1 **characterised in that** one (27) of the first and second pistons (27,28) is moved in its bore (29) by a mechanical link (38) with one pedal (39) and the other (28) of the first and second pistons is moved in its bore (36) by hydraulic pressure which enters its bore from a pressure source (41) operated by the other pedal (42).

3. An actuator according to claim 1 **characterised in that** both the first and second pistons (27,28) are moved in their bores (29,36) by hydraulic pressure which enters their respective bores from pressure sources (45,41) operated by the respective first and second pedals (39,42).

4. An actuator according to claim 3 **characterised in that** the first and second pistons (27,28) are hydraulically balanced to move the main piston (13) by the same amount in response to the admission of the same volume of fluid into the first and second bores (29,36).

5. An actuator according to any one of claims 1 to 4 **characterised in that** the first and second pistons (27,28) are disposed concentrically one inside the other.

6. An actuator according to claim 5 **characterised in that** the main piston (13) is spring biased (20) towards a fully retracted clutch released position in which the actuating chamber (14) is in fluid communication with a fluid reservoir (23a).

7. An actuator according to any one of claims 1 to 6 **characterised in that** valve means (35) is provided to allow fluid to enter the actuating chamber (14) during retraction of the main piston (13) to prevent the generation of a fluid depression in the actuating chamber.

8. An actuator according to any one of claims 1 to 7 **characterised in that** the first and second pistons (27,28) are each spring-biased (33,37) away from the main piston (13) towards a fully retracted position in their respective bores (29,36).

## Patentansprüche

1. Doppelkupplung-Betätigungsvorrichtung (10) zur Betätigung von einem ersten und zweiten Kupplungsbetätigungspedal (39, 42), die voneinander getrennt sind, wobei die Betätigungsvorrichtung einen Hauptkolben (13) aufweist, der in einer Hauptbohrung (12) bewegbar ist, um einen Kupplungsbetätigungsdruck an einen Kupplungsbetätigungsauslass (15) von einer Betätigungskammer (14) aus zu liefern, wobei der Hauptkolben in der Bohrung durch auf ihn aufgebrachte Kräfte unabhängig bewegbar ist, die aus einer Bewegung des ersten bzw. zweiten Pedals resultieren, wobei die Betätigungsvorrichtung **dadurch gekennzeichnet ist; dass** der Hauptkolben (13) in der Hauptbohrung (12) durch eine Berührung mit dem ersten und zweiten Kolben (27, 28) bewegt wird, die in ihrer jeweiligen ersten und zweiten Bohrung (29, 36) bewegbar sind.

2. Betätigungsvorrichtung nach Anspruch 1, **dadurch gekennzeichnet, dass** einer (27) von dem ersten und zweiten Kolben (27, 28) in seiner Bohrung (29) durch eine mechanische Verbindung (38) mit einem Pedal (39) bewegt wird und der andere (28) von dem ersten und zweiten Kolben in seiner Bohrung (36) durch Hydraulikdruck bewegt wird, der in seine Bohrung von einer Druckquelle (41) her eintritt, die durch das andere Pedal (42) betrieben wird.

3. Betätigungsvorrichtung nach Anspruch 1, **dadurch gekennzeichnet, dass** beide, der erste und der zweite Kolben (27, 28) in ihren Bohrungen (29, 36) durch Hydraulikdruck bewegt werden, der in ihre jeweiligen Bohrungen von Druckquellen (45, 41) her eintreten, die durch das jeweilige erste und zweite Pedal (39, 42) betätigt werden.

4. Betätigungsvorrichtung nach Anspruch 1, **dadurch gekennzeichnet, dass** der erste und zweite Kolben (27, 28) hydraulisch ausgeglichen werden, um den Hauptkolben (13) um den gleichen Betrag als Antwort auf die Zulassung des gleichen Flüssigkeitsvolumens in die erste und zweite Bohrung (29, 36) zu bewegen.

5. Betätigungsvorrichtung nach irgendeinem der Ansprüche 1 bis 4, **dadurch gekennzeichnet, dass** der erste und zweite Kolben (27, 28) konzentrisch mit einem innerhalb des anderen angeordnet sind.

6. Betätigungsvorrichtung nach Anspruch 5, **dadurch gekennzeichnet, dass** der Hauptkolben (13) durch eine Feder in eine vollständig zurückgezogene Kupplungslösestellung vorgespannt (20) ist, in der die Betätigungskammer (14) in Strömungsverbindung mit einem Flüssigkeitsvorrat (23a) steht.

7. Betätigungsvorrichtung nach irgendeinem der Ansprüche 1 bis 6, **dadurch gekennzeichnet, dass** eine Ventileinrichtung (35) vorgesehen ist, um Flüssigkeit in die Betätigungskammer (14) während der Zurückziehung des Hauptkolbens (13) eintreten zu lassen, um die Erzeugung eines Flüssigkeitsunterdrucks in der Betätigungskammer zu verhindern.

8. Betätigungsvorrichtung nach irgendeinem der Ansprüche 7, **dadurch gekennzeichnet, dass** der erste und zweite Kolben (27, 28) jeweils durch eine Feder (33, 37) von dem Hauptkolben (13) weg in Richtung auf eine vollständig zurückgezogene Stellung in ihren jeweiligen Bohrungen (29, 36) vorgespannt sind.

## Revendications

1. Double actionneur d'embrayage (10) à actionner à partir d'une première et d'une seconde pédales distinctes de commande d'embrayage (39, 42), l'actionneur comprenant un piston principal (13) pouvant se déplacer dans un alésage principal (12) pour fournir une pression de commande d'embrayage à une sortie de commande d'embrayage (15) à partir d'une chambre d'actionnement (14), le piston principal pouvant se déplacer indépendamment dans ledit alésage sous l'application de forces résultant respectivement du déplacement de la première et de la seconde pédales, l'actionneur **se caractérisant en ce que** le piston principal (13) se déplace dans l'alésage principal (12) par contact avec les premier et second pistons (27, 28) pouvant se déplacer dans le premier et le second alésage respectif (29, 36).

2. Actionneur selon la revendication 1, **caractérisé en ce que** l'un (27) des premier et second pistons (27, 28) se déplace dans son alésage (29) par liaison mécanique (38) avec une pédale (39), et l'autre (28) des premier et second pistons se déplace dans son alésage (36) par pression hydraulique qui pénètre dans son alésage sous l'action d'une source de pression (41) commandée par l'autre pédale (42).

3. Actionneur selon la revendication 1, **caractérisé en ce que** les premier et second pistons (27, 28) se déplacent dans leur alésage (29, 36) par pression hydraulique qui pénètre leur alésage respectif sous l'action de sources de pression (45, 41) commandées respectivement par les première et seconde pédales (39, 42).

4. Actionneur selon la revendication 3, **caractérisé en ce que** les premier et second pistons (27, 28) sont équilibrés hydrauliquement afin de déplacer le piston principal (13) d'une même amplitude, en réponse à l'admission du même volume de fluide dans les premier et second alésages (29, 36).

5. Actionneur selon l'une quelconque des revendications 1 à 4, **caractérisé en ce que** les premier et second pistons (27, 28) sont disposés concentriquement l'un à l'intérieur de l'autre.

6. Actionneur selon la revendication 5, **caractérisé en ce que** le piston principal (13) est poussé par ressort (20) vers une position de débrayage en retrait total où la chambre d'actionnement (14) est en communication de fluide avec un réservoir de fluide (23a).

7. Actionneur selon l'une quelconque des revendications 1 à 6, **caractérisé en ce qu'**il est prévu un clapet (35) destiné à permettre au fluide de pénétrer dans la chambre d'actionnement (14) lois du retrait du piston principal (13) afin de prévenir la formation d'une dépression de fluide dans la chambre d'actionnement.

8. Actionneur selon l'une quelconque des revendications 1 à 7, **caractérisé en ce que** les premier et second pistons (27, 28) sont chacun poussés par ressort (33, 37) à l'opposé du piston principal (13) et en direction d'une position de retrait total dans leur alésage respectif (29, 36).
